# EUROPÄISCHE PATENTANMELDUNG

(11) **EP 3 939 753 A1**
(43) Veröffentlichungstag der Anmeldung: **19.01.2022**
(21) Anmeldenummer: 21185994.7
(22) Anmeldetag: 16.07.2021
(51) Int. Cl.: B25J 9/16

(54) **VERFAHREN ZUR AUSRICHTUNG EINES ROBOTERARMS**

(30) Priorität: 17.07.2020 DE 102020208961
(71) Anmelder: Rethink Robotics GmbH, 44894 Bochum (DE)
(72) Erfinder: Bachmann, Christian, 80686 München (DE); Bergmann, Dominik, 83679 Sachsenkam (DE); Mantel, Mirjam, 85540 Haar (DE); Mose, Christian, 81476 München (DE); Pais, Guillaume, 81667 München (DE)
(74) Vertreter: Grünecker Patent- und Rechtsanwälte PartG mbB

(57) **Zusammenfassung**

Es wird ein Verfahren zur Ausrichtung eines Roboterarms (100) in einer übergeordneten Referenzpose (Pr) angegeben,
- wobei der Roboterarm (100) eine Mehrzahl von Robotikgelenken (J1 bis J7) aufweist, welche jeweils eine Antriebseinrichtung (1) umfassen, die eine Drehung um eine zugehörige Rotationsachse (A1 bis A7) ermöglicht,
- wobei für zumindest zwei ausgewählte Robotikgelenke (J2,J3,J5,Ga,Gb,Gc) durch ein oder mehrere andere Teilelemente des Roboterarms (100) ein zugehöriges exzentrisches Hebelelement (200) gebildet ist,
- wobei das Verfahren die folgenden Teilschritte umfasst:
i) automatisiertes Ausrichten der Antriebseinrichtung (1) eines ersten ausgewählten Robotikgelenks (Gb) in einer ersten Zielposition (θ_{b1}) bei welcher sich das zugehörige erste exzentrische Hebelelement (200b) in einer Umkehrlage befindet,
ii) automatisiertes Ausrichten der Antriebseinrichtung (1) eines zweiten ausgewählten Robotikgelenks (Ga) in einer zweiten Zielposition (θₐ₂), bei welcher sich das zugehörige zweite exzentrische Hebelelement (200a) in einer Umkehrlage befindet,
wobei die Teilschritte i) und ii) in einer iterativen Schleife so lange nacheinander wiederholt werden, bis die in jedem Teilschritt bewirkte Winkeländerung einen vorgegebenen Grenzwert unterschreitet.

## Beschreibung

Die vorliegende Erfindung betrifft ein Verfahren zur Ausrichtung eines Roboterarms in einer übergeordneten Referenzpose, wobei der Roboterarm eine Mehrzahl von Robotikgelenken aufweist, welche jeweils eine Antriebseinrichtung umfassen, die eine Drehung um eine zugehörige Rotationsachse ermöglicht.

Aus dem Stand der Technik sind mehrachsige Roboterarme grundsätzlich bekannt. So werden für industrielle Anwendungen häufig Roboterarme mit sechs oder sieben Rotationsantrieben eingesetzt, da durch die hohe Anzahl von Freiheitsgraden eine sehr flexible Positionierung ermöglicht wird. Durch die relativ große Anzahl an Bewegungsfreiheitsgraden solcher mehrachsiger Roboterarme ist es oft relativ aufwändig, eine absolute Kalibrierung der von den einzelnen Robotikgelenken einstellbaren Winkelpositionen und somit eine Kalibrierung der absoluten Pose eines am äußersten Gelenk angebrachten Endeffektors zu erreichen. Um mit dem Roboterarm eine präzise absolute Positionierung zu erreichen, ist es jedoch nötig, die Ausrichtung der einzelnen Gelenke zueinander möglichst genau zu kennen. Dies kann grundsätzlich durch die Integration von Drehgebern in die einzelnen Robotikgelenke und durch möglichst genaue Kalibrierung der mit diesen Drehgebern gemessenen Winkelpositionen erreicht werden. Wenn sich an den absoluten Einbaulagen der einzelnen Gelenkantriebe während der Betriebsdauer des Roboterarms etwas verstellt, muss aber die absolute Winkelkalibrierung aller einzelnen Gelenke unter Umständen wiederholt werden. Vor allem wenn zur absoluten Winkel-Kalibrierung bezüglich aller vorhandenen Freiheitsgrade externe Sensoren und/oder manuelle Vermessungsmaßnahmen eingesetzt werden, gestaltet sich ein solches Verfahren als relativ aufwändig.

Es besteht daher grundsätzlich ein Bedarf, einen Roboterarm auch ohne eine extern durchgeführte Winkelkalibrierung für alle Rotationsgelenke möglichst einfach und automatisierbar in einer vorgegebenen übergeordneten Referenzpose ausrichten zu können. Von dieser übergeordneten Referenzpose aus könnten dann auch andere definierte Posen durch definierte relative Winkeländerungen präzise eingestellt werden.

Aufgabe der Erfindung ist es daher, ein Verfahren zur Ausrichtung eines mehrachsigen Roboterarms in einer übergeordnete Referenzpose zur Verfügung zu stellen, mit welchem die Referenzpose mit einer hohen Positionsgenauigkeit und auf einfache Weise erreicht werden kann. Insbesondere soll das Verfahren automatisiert und ohne die Verwendung von externer Sensorik durchgeführt werden können.

Diese Aufgabe wird durch das in Anspruch 1 beschriebene Verfahren gelöst. Das Verfahren dient zur Ausrichtung eines Roboterarms in einer übergeordneten Referenzpose. Dieser Roboterarm weist eine Mehrzahl von Robotikgelenken auf, welche jeweils eine Antriebseinrichtung umfassen, die eine Drehung um eine zugehörige Rotationsachse ermöglicht. Dabei ist für zumindest zwei ausgewählte Robotikgelenke durch ein oder mehrere andere Teilelemente des Roboterarms ein zugehöriges exzentrisches Hebelelement gebildet. Das Verfahren umfasst die folgenden Teilschritte:
i) automatisiertes Ausrichten der Antriebseinrichtung eines ersten ausgewählten Robotikgelenks in einer ersten Zielposition, bei welcher sich das zugehörige erste exzentrische Hebelelement in einer Umkehrlage befindet,
ii) automatisiertes Ausrichten der Antriebseinrichtung eines zweiten ausgewählten Robotikgelenks in einer zweiten Zielposition, bei welcher sich das zugehörige zweite exzentrische Hebelelement in einer Umkehrlage befindet.

Diese beiden Teilschritte i) und ii) werden in einer iterativen Schleife so lange nacheinander wiederholt, bis die in jedem Teilschritt bewirkte Winkeländerung einen vorgegebenen Grenzwert unterschreitet.

Es wird also die automatisierte Ausrichtung eines mehrachsigen Roboterarms beschrieben. Unter der "übergeordneten Referenzpose" soll eine Zielanordnung dieses mehrachsigen Roboterarms verstanden werden, bei der zumindest eine Teilmenge der Robotikgelenke in eine vorgegebene Winkelposition gebracht ist. Allgemein wird in der Robotik unter eine Pose die Kombination von Position und Orientierung eines Objekts verstanden. Der wesentliche, zu positionierende und zu orientierende Teil eines Roboterarms ist dabei typischerweise ein Endeffektor, welcher mit dem (von einer Basis aus gesehen) äußersten Gelenk verbunden ist. Im Zusammenhang mit dem vorliegenden Verfahren soll aber unter der Referenzpose nicht nur eine vorgegebene Position und Orientierung des Endeffektors verstanden werden, sondern eine vorgegebene Winkelposition für jedes einzelne der "ausgewählten Robotikgelenke". Zumindest für diese ausgewählten Gelenke sollen die Geometrieparameter vollständig bestimmt sein, da eine Pose des Endeffektors unter Umständen ja durch verschiedene Kombinationen von Einstellungen erreicht werden kann.

Unter den "ausgewählten Robotikgelenken" soll hier eine Untermenge der insgesamt vorliegenden Robotikgelenke verstanden werden - nämlich all diejenigen Gelenke, deren Winkelposition im Rahmen der übergeordneten Referenzpose genau festgelegt ist. Entsprechend müssen nur diese "ausgewählten Robotikgelenke" mit dem erfindungsgemäßen Verfahren ausgerichtet werden. Die übrigen Robotikgelenke (sofern vorhanden), können dagegen auch in der übergeordneten Referenzposition eine beliebige Winkelposition einnehmen. Sie sind also auch innerhalb der Referenzposition frei variabel bzw. sie werden zumindest bei Durchlaufen des erfindungsgemäßen Verfahrens nicht zwingend in eine vordefinierte Winkelposition gebracht. Die Winkelpositionen dieser "nicht teilnehmenden" Gelenke sollten allerdings während der Durchführung des Verfahrens nicht verändert werden.

Vorteilhaft wird zumindest eine überwiegende Anzahl der vorhandenen Robotikgelenke im Rahmen der Referenzpose in einer vordefinierten Winkelposition ausgerichtet. Dies betrifft vor allem diejenigen Gelenke, mit denen eine vertikale Ausrichtung der benachbarten Glieder ermöglicht wird.

Unter einem "exzentrischen Hebelelement" wird hier ein Element verstanden, welches bezüglich der jeweiligen Rotationsachse des betrachteten Gelenks exzentrisch angeordnet ist. Mit anderen Worten soll sein Massenschwerpunkt von der jeweils relevanten Rotationsachse beabstandet sein. Auf diese Weise wirkt das exzentrische Hebelelement unter dem Einfluss der Schwerkraft als Hebel, so dass es abhängig von Winkelstellungen ein Drehmoment im Bereich des Abtriebskörpers bewirken kann. Dieses exzentrische Hebelelement wird durch ein oder mehrere andere Teilelemente des Roboterarms gebildet. Insbesondere kann das Hebelelement jeweils durch weiter außenliegende (also von einer Basis weiter entfernte) Robotikgelenke und/oder Robotikglieder, gegebenenfalls in Kombination mit einem Werkzeug eines Endeffektors, gebildet sein. Auf diese Weise ist das für das automatische Ausrichtungsverfahren benötigte Hebelelement zumindest für die ausgewählten Robotikgelenke bereits durch vorhandene Elemente des Roboterarm gebildet und muss nicht erst für die Kalibrierung hinzugefügt werden.

Das exzentrische Hebelelement kann durch den Einfluss der Schwerkraft und in Abhängigkeit von seiner Winkelposition bezüglich der zentralen Achse ein Drehmoment ausüben, dessen Auswirkung auch innerhalb der Antriebsvorrichtung messbar ist. Um dies zu erreichen, weist die relevante Rotationsachse zweckmäßig zumindest eine Richtungskomponente senkrecht zum Gravitationsvektor auf. Besonders vorteilhaft sind sie Rotationsachsen der ausgewählten Robotikgelenke zumindest in der übergeordneten Referenzpose (also dem Ziel-Zustand) im Wesentlichen senkrecht zum Gravitationsvektor ausgerichtet, liegen also horizontal im Raum. Auch zu Beginn des automatisierten Ausrichtungs-Verfahrens ist es günstig, wenn die Rotationsachsen der ausgewählten Gelenke einen Winkel von 45° oder mehr mit dem Gravitationsvektor einschließen, um eine Ausrichtung der einzelnen Gelenke gemäß den einzelnen Teilschritten von Anfang an zu ermöglichen.

Die genannte "Umkehrlage" kann insbesondere eine obenliegende Umkehrlage sein. Dabei ist das exzentrische Hebelelement des betrachteten Gelenks so ausgerichtet, dass sein Massenschwerpunkt vertikal genau über der betrachteten Rotationsachse liegt. Der Massenschwerpunkt soll also geodätisch höher liegen als die Rotationsachse. Prinzipiell kann die Umkehrlage allerdings auch eine untenliegende Umkehrlage sein, bei der der Massenschwerpunt vertikal genau unter der betrachteten Rotationsachse liegt. In jedem Fall soll die auf den Massenschwerpunkt einwirkende Gravitationskraft in der Umkehrlage genau in Richtung der Rotationsachse wirken, so dass bezüglich dieser Rotationsachse aufgrund der Schwerkraft kein Drehmoment wirkt.

Das erfindungsgemäße Verfahren zur Ausrichtung des Roboterarms nutzt die Erkenntnis aus, dass der Nulldurchgang im Drehmoment des Hebelarms automatisiert erkannt werden kann. Hierzu können zumindest die "ausgewählten Robotikgelenke" mit einer Messvorrichtung versehen sein, mit welcher die Umkehrlage erkannt wird. Diese Messvorrichtung kann (direkt oder indirekt) auf einer Messung des durch die Einwirkung der Schwerkraft bewirkten Drehmoments auf das Hebelelement beruhen. Wenn eine solche Messung automatisiert möglich ist, dann ist auch eine automatisierte Ausrichtung des Hebelelements in der Umkehrlage möglich.

Das erfindungsgemäße Verfahren zur Ausrichtung des Roboterarms in der übergeordneten Referenzpose beruht auf der Erkenntnis, dass nicht nur Einzelgelenke, sondern unter Umständen auch der ganze Roboterarm oder zumindest eine Mehrzahl von ausgewählten Gelenken nacheinander über die Drehung des Hebels in die Umkehrlage ausgerichtet werden können. Wenn diese iterative Schleife für zumindest zwei ausgewählte Gelenke häufig genug wiederholt wird, dann kann insgesamt eine sehr genaue und vor allem autonome vertikale Streckung des Roboterarms erreicht werden. Die iterative Schleife ist nötig, da für eine Änderung der Ausrichtung in den weiter außenliegenden Teilen des Roboterarms der Schwerpunkt des für die innenliegenden Gelenke wirksamen exzentrischen Hebelelements verändert wird. Somit wird durch eine Posenänderung "weiter außen" auch jeweils ein erneutes Ansteuern der resultierenden neuen Umkehrlage des Hebelelements für die inneren Glieder nötig. Wenn das abwechselnde Ansteuern der jeweiligen Umkehrlage häufig genug wiederholt wird, kann mit einem iterativen Verfahren mit relativ hoher Genauigkeit die am weitesten vertikal ausgestreckte Pose eingenommen werden.

Diese autonome Ausrichtung in der übergeordneten Referenzpose kann mit einem vergleichsweise geringen apparativen Aufwand erreicht werden, da die Bestimmung der Umkehrlagen mit vergleichsweise einfachen Messvorrichtungen möglich ist, wie weiter unten noch ausführlicher erläutert wird. Auch der zeitliche Aufwand für diese Selbst-Ausrichtung ist vorteilhaft gering, da jeder Teilschritt bei einer automatisierten Ausführung (z.B. über eine automatische Steuervorrichtung innerhalb der jeweiligen Antriebseinrichtung) nur sehr wenig Zeit benötigt. Auf diese Weise wird eine einfache und genaue Selbstjustage des Roboterarms bezüglich mehrerer Gelenke ermöglicht, die insbesondere ohne externe Sensorik und ohne menschliche Interaktion durchgeführt werden kann.

Die Genauigkeit dieser Selbstjustage hängt dabei von der Wahl der vorgegebenen Grenzwerte ab. Prinzipiell können diese Grenzwerte für die einzelnen ausgewählten Gelenke entweder gleich oder unterschiedlich gewählt sein. So kann der Grenzwert für die Winkeländerung insbesondere dann besonders niedrig gewählt werden, wenn für ein gegebenes Gelenk der Einfluss der Winkeleinstellung auf die Ausrichtung und Position des Endeffektors besonders groß ist. Dies ist aufgrund der Fortpflanzung von Ungenauigkeiten von innen nach außen typischerweise vor allem für basisnahe Gelenke der Fall. Allgemein kann die erreichte Genauigkeit also über die Wahl der eingestellten Grenzwerte eingestellt werden.

Vorteilhafte Ausgestaltungen und Weiterbildungen der Erfindung gehen aus den von Anspruch 1 abhängigen Ansprüchen sowie der folgenden Beschreibung hervor.

So können die Antriebseinrichtungen der wenigstens zwei ausgewählten Robotikgelenke jeweils eine elektrische Antriebsmaschine umfassen. Sie können außerdem jeweils einen Abtriebskörper umfassen, welcher mittels der Antriebsmaschine bezüglich der zugehörigen Rotationsachse drehbar ist. Weiterhin können sie jeweils einen Stromsensor zur Messung eines innerhalb der elektrischen Antriebsmaschine fließenden Betriebsstroms umfassen.

Gemäß einer besonders bevorzugten Ausführungsform des Verfahrens kann für jede dieser Antriebseinrichtungen der "ausgewählten Robotikgelenke" das automatisierte Ausrichten in der ersten Zielposition durch die folgenden Teilschritte bewirkt werden:
a) aufeinanderfolgendes Ansteuern einer Mehrzahl von vorgegebenen Winkelpositionen des Abtriebskörpers,
b) Messung eines zugehörigen Stromwerts für jede vorgegebene Winkelposition mittels des Stromsensors,
c) Ermittlung einer Zielposition aus den so ermittelten Wertepaaren, derart dass der zugehörige Stromwert der Zielposition einem Nulldurchgang möglichst nahekommt.

Bei dieser Ausführungsform wird die Tatsache ausgenutzt, dass in vielen Antriebsvorrichtungen ohnehin Stromsensoren zur Messen des in der Antriebsmaschine fließenden Betriebsstroms vorhanden sind. In jedem Fall sind solche Stromsensoren sehr einfach in eine solche Antriebsvorrichtung zu integrieren. Durch das exzentrische Hebelelement wird zumindest in bestimmten Winkelpositionen ein Drehmoment erzeugt, das über den Abtriebskörper und typischerweise eine Antriebswelle (gegebenenfalls über ein zwischengeschaltetes Getriebe) in den Bereich der Antriebsmaschine übertragen wird. Somit kann das Drehmoment des Hebelelement auch einen Einfluss auf den Betriebsmodus der Antriebsmaschine ausüben. Für den Betrieb der elektrischen Antriebsmaschine ergeben sich zwei mögliche Betriebszustände: Sie kann entweder im "Motor-Modus" oder im "Generator-Modus" betrieben werden. Im Motor-Modus arbeitet die Maschine entgegen der auf das Hebelelement wirkenden Schwerkraft und dreht das Hebelelement in Richtung einer Umkehrlage. Hierzu muss elektrische Energie aufgewendet werden. Im Generator-Modus arbeitet die Maschine in Richtung der auf das Hebelelement wirkenden Schwerkraft und dreht das Hebelelement auf die untere Umkehrlage zu. Hierbei kann elektrische Energie erzeugt werden. Sowohl bei der oberen Umkehrlage als auch bei der unteren Umkehrlage wird das vom Hebelelement bewirkte Drehmoment Null, und es findet in diesen Bereichen ein Nulldurchgang der aufgewendeten bzw. erzeugten elektrischen Energie statt. Dieser Nulldurchgang kann über einen Nulldurchgang des gemessenen Stromwertes ermittelt werden. Die elektrische Maschine kann beispielsweise mit Drei-Phasen-Wechselstrom betrieben werden. Als Stromwert kann dabei beispielsweise die Amplitude des Phasenstroms (A_peak) des Maschinenstroms gemessen werden.

Die elektrische Maschine kann einen Rotor und einen Stator umfassen. Beispielsweise kann der Betriebsstrom der in einer Ankerwicklung fließende Strom sein, wobei die Ankerwicklung grundsätzlich innerhalb des Stators oder auch innerhalb des Rotors angeordnet sein kann. Es können grundsätzlich auch andere Maschinentypen zum Einsatz kommen, bei denen insbesondere die Art der Strommessung auch anders erfolgen kann. Wesentlich ist im Zusammenhang mit der vorliegenden Ausführungsform nur, dass der in den Umkehrpositionen des Hebels stattfindende Wechsel zwischen Motor-Modus und Generator-Modus zu einem Wechsel im Vorzeichen des gemessenen Stromwertes führt.

Im Rahmen des Ausrichtungs-Verfahrens wird in jedem Teilschritt die relevante Zielposition als diejenige Position des Hebelelements ermittelt, bei der der gemessene Stromwert einem Nulldurchgang möglichst nahekommt. Allgemein kann diese obere bzw. untere Umkehrposition durch ein einmaliges oder auch durch ein mehrmaliges Abfahren der Winkelpositionen und Messen der zugehörigen Stromwerte ermittelt werden. Die Zuordnung eines gemessenen Nulldurchgangs zu einer obenliegenden Umkehrposition ist allgemein aus der Richtung des Vorzeichenwechsels ableitbar, da beim Überschreiten dieser Position unabhängig vom Drehsinn immer vom Motor-Modus in den Generator-Modus gewechselt wird. Beim Durchlaufen der untenliegenden Umkehrposition ist es dagegen umgekehrt. Bei entsprechend hoher Genauigkeit der Messung des Strom-Nullpunktes kann damit auf sehr einfache Weise und mit typischerweise ohnehin vorhandener Messtechnik eine sehr präzise Auffindung der jeweiligen Umkehrposition für das gegebene "ausgewählte Gelenk" durchgeführt werden. Die Zielposition des jeweils betrachteten Hebelelements wird dabei in Bezug auf die absolute Lage des Gravitationsvektors im Raum ermittelt.

Weitere Vorteile, Merkmale und Ausführungsvarianten dieser bevorzugten Ausführungsform mit Strommessung werden in der von derselben Anmelderin und am selben Anmeldetag einreichten Anmeldung mit dem Titel "Verfahren zur Winkelpositions-Kalibrierung, Antriebseinrichtung und Roboterarm" beschrieben. Der Offenbarungsgehalt dieser parallelen Anmeldung soll daher in die vorliegende Anmeldung mit einbezogen sein.

Gemäß einer vorteilhaften Variante der Ausführungsform mit Strommessung kann jeweils der Schritt a) die folgenden Teilschritte aufweisen:
a1) aufeinanderfolgendes Ansteuern einer ersten Abfolge von vorgegebenen Winkelpositionen, so dass dabei der Abtriebskörper kontinuierlich mit einer festen ersten Drehrichtung gedreht wird,
a2) aufeinanderfolgendes Ansteuern einer zweiten Abfolge von vorgegebenen Winkelpositionen, so dass dabei der Abtriebskörper kontinuierlich mit einer entgegengesetzten zweiten Drehrichtung gedreht wird.

Dabei kann in Schritt c) aus den ermittelten Wertepaaren der ersten Abfolge ein erster Referenzwinkel bestimmt werden, und aus den ermittelten Wertepaaren der zweiten Abfolge kann ein zweiter Referenzwinkel bestimmt werden. Aus einer Mittelung von erstem und zweitem Referenzwinkel kann dann eine übergeordnete Zielposition für das Hebelelement des jeweils aktuellen ausgewählten Robotikgelenks bestimmt werden. Mit anderen Worten können durch eine Mittelung der Nulldurchgangs-Winkel für eine Hinrichtung und eine Rückrichtung die bei der Messung auftretenden Hystereseeffekte herauskorrigiert werden, wie in der parallel eingereichten Anmeldung ausführlicher beschrieben ist. Hierdurch kann eine noch präzisere Bestimmung der jeweiligen Umkehrlage erfolgen als mit einem einfachen Durchlauf der Strommessung in Abhängigkeit von der Winkelposition.

Allgemein vorteilhaft kann die Gesamtzahl der Robotikgelenke zwischen 3 und 7 liegen. Auch wenn das erfindungsgemäße iterative Verfahren zwar schon mit einem zweiachsigen Roboterarm genutzt werden kann, so kommen die Vorteile der autonomen Ausrichtung bei solchen höherachsigen Roboterarmen besonders deutlich zum Tragen: Aufgrund der Komplexität solcher vielachsigen Roboterarme wird die Ausrichtung in einer übergeordneten Referenzpose mit steigender Achszahl immer schwieriger. Umso mehr wirken sich dann die Vorteile einer präzisen, automatisierten Ausrichtung aus, welche keine zusätzliche externe Sensorik benötigt. Für viele industrielle Aufgaben werden heutzutage 6- oder 7-achsige Roboterarme eingesetzt. Allerdings müssen nicht alle diese Robotikgelenke sogenannte ausgewählte Robotikgelenke im Sinne des erfindungsgemäßen Verfahrens sein. Auch bei den mehrachsigen Roboterarmen reicht es prinzipiell aus, wenn zwei Gelenke als "ausgewählte Robotikgelenke" iterativ ausgerichtet werden.

Besonders vorteilhaft werden bei einem solchen vielachsigen Roboterarm allerdings drei oder mehr ausgewählte Robotikgelenke mit dem beschriebenen Verfahren ausgerichtet. So kann für eine Anzahl n von drei oder mehr ausgewählten Robotikgelenken jeweils durch ein oder mehrere andere Teilelemente ein zugehöriges exzentrisches Hebelelement gebildet sein. Dann kann das Verfahren eine iterative Schleife umfassen, bei der in jedem Durchlauf der Schleife für alle n ausgewählten Robotikgelenke nacheinander der folgende Teilschritt durchgeführt wird:
s-i) automatisiertes Ausrichten der Antriebseinrichtung des jeweiligen ausgewählten Robotikgelenks in einer zugehörigen Zielposition, bei welcher sich das zugehörige exzentrische Hebelelement in einer Umkehrlage befindet.

Diese Schleife soll so oft durchlaufen werden, bis die in jedem Teilschritt bewirkte Winkeländerung einen vorgegebenen Grenzwert unterschreitet.

Dabei soll "i" den Index des jeweiligen Teilschritts s-i bezeichnen und von 1 bis n über alle ausgewählten Robotikgelenke laufen. Dabei entspricht also der in Anspruch 1 erwähnte Teilschritt i) dem Teilschritt s-1) und der in Anspruch 1 erwähnte Teilschritt ii) entspricht dem Teilschritt s-2) in der allgemeineren Formulierung. Die Gesamtzahl der Teilschritte in einem Schleifendurchlauf ist n. Bei dieser Ausführungsform wird also die iterative automatisierte Ausrichtung von zwei ausgewählten Robotikgelenken auf drei oder mehr erweitert.

Gemäß einer ersten Ausführungsvariante der iterativen Schleife kann bei jedem Durchlauf der Schleife die Reihenfolge, in der die einzelnen ausgewählten Robotikgelenke ausgerichtet werden, kontinuierlich von außen nach innen verlaufen. Unter den innenliegenden Gelenken sollen hier allgemein diejenigen Gelenke verstanden werden, welche einer Basis des Roboterarms näher sind, und unter den außenliegenden Gelenken sollen diejenigen Gelenke verstanden werden, welche einem Endeffektor des Roboterarms näher sind. Es werden also zunächst die außenliegenden Gelenke gestreckt, und dann werden die weiter innenliegenden Gelenke gestreckt. Danach wird die Streckung der außenliegenden Gelenke wiederholt, und die innenliegenden Gelenke werden mit ihrer erneuten Streckung an die neue Lage der äußeren Gelenke (und die dadurch veränderte SchwerpunktLage des gebildeten Hebelelements) angepasst. Vor allem wenn die weiter außenliegenden Glieder (also die Koppeln zwischen den einzelnen Robotikgelenken) kleiner und leichter ausgebildet sind als die weiter innenliegenden Glieder kann dieses iterative Vorgehen von außen nach innen vergleichsweise schnell zu einem Konvergieren der übergeordneten Pose führen.

Alternativ kann nach einer zweiten Ausführungsvariante der iterativen Schleife bei jedem Durchlauf der Schleife die Reihenfolge, in der die einzelnen ausgewählten Robotikgelenke ausgerichtet werden, kontinuierlich von innen nach außen verlaufen. Abhängig von der genauen Dimensionierung der einzelnen Koppeln und Gelenke kann auch dieses Vorgehen unter Umständen zu einer besonders schnellen Konvergenz des iterativen Verfahrens führen. Allgemein ist es auch nicht unbedingt nötig, dass eine kontinuierliche bzw. überhaupt eine fest vorgegebene Reihenfolge eingehalten wird. So kann es unter Umständen auch vorteilhaft sein, in der Abfolge eines Schleifendurchlaufs zwischen innenliegenden und außenliegenden Gelenken hin und her zu springen. Außerdem ist es auch möglich und unter Umständen vorteilhaft, die Reihenfolge bei verschiedenen Schleifendurchlaufen zu variieren. So kann beispielsweise die Reihenfolge in einem gegebenen Schleifendurchlauf daran angepasst werden, wie hoch die Winkeländerungen der jeweiligen Gelenke im vorhergehenden Durchlauf gewesen sind. Es ist auch möglich, in einem Schleifendurchlauf bestimmte Gelenke zu überspringen.

Allgemein ist es vorteilhaft, wenn der Roboterarm vor Beginn des beschriebenen iterativen Verfahrens in einen Ausgangszustand gebracht wird, welcher nach den vorliegenden Information über das System der zu erreichenden übergeordneten Referenzpose möglichst nahekommt. Auch wenn die genaue absolute Winkelposition der einzelnen Gelenkantriebe nicht bekannt ist bzw. nur ungenau kalibriert ist, so können doch typischerweise für jede Winkelposition zumindest Schätzwerte ermittelt werden. Somit kann der Roboterarm vor dem Durchlaufen des iterativen Verfahrens in eine ungefähre Zielpose gebracht werden, was die Konvergenz des Verfahrens wesentlich beschleunigen kann.

Gemäß einer besonders vorteilhaften Ausführungsform können entweder alle vorhandenen Robotikgelenke oder alle mit Ausnahme des innersten und/oder äußersten Robotikgelenks sogenannte "ausgewählte Robotikgelenke" sein, welche innerhalb der iterativen Schleife automatisch ausgerichtet werden können. Je mehr von den vorhandenen Gelenken als "ausgewählte Gelenke" automatisch ausgerichtet werden können, desto vollständiger kann die zu erreichende übergeordnete Referenzpose definiert werden. Mit anderen Worten kann die automatisierte Ausrichtung dann umso mehr rotatorische Freiheitsgrade einbeziehen. Dies ist in der Praxis jedoch nicht immer möglich, wie auch im Zusammenhang mit den Figuren deutlich wird. So kann beispielsweise das innerste Gelenk (welches einer Basis am nächsten ist), fest in vertikaler Einbaulage montiert sein. Bei einer Drehung um dieses Gelenk wird somit keine Änderung eines im Gelenkantrieb wirkenden Drehmoments verursacht. Somit kann ein solches Gelenk nicht mit dem beschriebenen Verfahren automatisch ausgerichtet werden. Stattdessen muss die Ausrichtung dieses Gelenks anhand einer anderweitig ermittelten Winkelkalibrierung erfolgen. Auch das äußerste, typischerweise den Endeffektor tragende Gelenk kann unter Umständen nicht oder weniger gut mit dem beschriebenen Verfahren auszurichten sein, vor allem wenn der Endeffektor noch nicht montiert ist oder sehr leicht ist und somit hier kein exzentrisches Hebelelement zur Verfügung steht oder nur eine geringe Hebelwirkung erreicht wird. Schließlich kann es vorkommen, dass noch weitere dazwischenliegende Gelenke keine "ausgewählten Robotikgelenke" sind, weil sie beispielsweise in der übergeordneten Referenzpose ebenfalls senkrecht im Raum stehen, und somit bei ihrer Rotation keine Variation des Drehmoments aufgrund der Schwerkraft erreicht wird. Auch hier kann entweder ein Rückgriff auf einer anderweitige Winkelkalibrierung erfolgen, oder der Zustand bezüglich eines solchen Gelenks wird bei der Definition der übergeordneten Referenzpose nicht näher bestimmt. Mit anderen Worten bleiben die Freiheitsgrade der "nicht ausgewählten Gelenke" dann variabel. Nur die "ausgewählten Gelenke" werden dann iterativ in die vertikal ausgestreckte Lage gebracht.

Allgemein vorteilhaft können die ausgewählten Robotikgelenke jeweils als Teil der Antriebsvorrichtung einen Drehgeber zur Bestimmung einer Winkellage des Abtriebskörpers aufweisen. Diese einzelnen Drehgeber können insbesondere mit einer jeweiligen lokalen Referenz-Winkelposition kalibriert werden, welche aus der erfindungsgemäß ermittelten übergeordneten Referenzpose abgeleitet wird. Die Drehgeber können beispielsweise relativreferenzierte Drehgeber sein, welche zur Ermittlung einer absoluten Winkelposition zwingend eine Kalibrierung benötigen. Alternativ kann es sich aber auch um absolutreferenziert Drehgeber handeln, bei denen aber die genaue Einbaulage im Gesamtsystem nicht von vorneherein bekannt ist. Auch bei solchen absolutreferenzierten Drehgebern kann das erfindungsgemäße Verfahren zu einer Kalibrierung der Winkelmessung bezogen auf die absolute Lage im Raum (also relativ zum Gravitationsvektor) genutzt werden.

Alternativ oder zusätzlich können die ausgewählten Robotikgelenke jeweils als Teil der Antriebsvorrichtung eine Drehmoment-Messvorrichtung zur Messung eines innerhalb der Antriebsvorrichtung wirkenden Drehmoments aufweisen. Als wesentlichen Bestandteil kann diese Messvorrichtung z.B. ein Speichenrad aufweisen. Dabei wird über eine Verformung der Speichen das über das Speichenrad übertragene Drehmoment gemessen. Die Verformung kann insbesondere über Dehnmessstreifen ermittelt werden. Bei dem gemessenen Drehmoment kann es sich insbesondere um ein Getriebeabstützmoment handeln. Die einzelnen Drehmoment-Messvorrichtungen können dann insbesondere durch Messung des Drehmoments in der übergeordneten Referenzpose des Roboterarms kalibriert werden. Mit anderen Worten wird das Drehmoment des jeweiligen Gelenks in der Umkehrlage gemessen, bei der das durch das zugeordnete Hebelelement bewirkte Drehmoment tatsächlich Null ist. Somit wird an dieser Stelle eine Nullpunkt-Messung für die Kalibrierung der Drehmoment-Messvorrichtung durchgeführt. Auf diese Weise kann ein Offset der Drehmoment-Messvorrichtung herauskorrigiert werden.

Allgemein kann nach Erreichen der übergeordneten Referenzpose ein ausgewähltes Robotikgelenk in eine Winkelposition bewegt werden, bei welcher das zugehörige exzentrische Hebelelement ein maximales Drehmoment bewirkt. Mit anderen Worten kann ausgehend von der vollständig vertikal ausgestreckten Referenzpose ein vorgegebenes Gelenk um 90° in die horizontale Lage des Hebelelements abgeknickt werden. Hiermit wird also eine Γ-förmige Pose mit einem Knick in dem einen vorgegebenen Gelenk eingenommen. Die Ansteuerung dieser Pose kann beispielsweise durch eine Drehung erreicht werden, welche einer durch den Drehgeber vorgegebenen relativen Winkeländerung von 90° entspricht. Alternativ kann die Ansteuerung dieser Pose aber auch dadurch erreicht werden, dass insbesondere durch Messung der Stromwerte automatisiert eine Bestimmung der maximalen Hebelposition erfolgt, und diese dann anschließend bezüglich des einen vorgegebenen Gelenks eingenommen wird. Unabhängig davon, wie die maximale Hebelposition erreicht wird, kann sie in jedem Fall dazu genutzt werden, eine weitere Kalibrierung der zugehörigen Drehmoment-Messvorrichtung in dem gegebenen Gelenk durchzuführen. Mit dieser zusätzlichen Messung kann neben dem Offset auch noch der Gain (also ein Proportionalitätsfaktor) der Drehmoment-Messung bestimmt werden. Mit anderen Worten kann so eine vollständige Kalibrierung der Drehmoment-Messvorrichtung erfolgen.

Allgemein vorteilhaft kann die gesamte Ausrichtung des Roboterarms in der übergeordneten Referenzpose in Intervallen mehrfach wiederholt werden. Die Referenzpose kann als sogenannte Ruhepose ("rest pose") dienen, in der der Roboterarm geparkt wird, solange keine andere Pose eingenommen werden muss. Mit dem erfindungsgemäßen Verfahren kann dies Ruhepose immer wieder reproduzierbar und mit geringem Aufwand autonom angefahren werden.

Außerdem wird durch wiederholte Einnahme der Ruhepose auf einfache Weise eine automatische, regelmäßige Re-Kalibrierung der Drehgeber und/oder Drehmoment-Messvorrichtungen der einzelnen Gelenke ermöglicht. Auch wenn sich beim Betrieb Änderungen im System ergeben, wird durch eine solche regelmäßige Kalibrierung dauerhaft eine genaue absolute Winkelpositions-Bestimmung ermöglicht. Eine solche wiederholte Kalibrierung kann insbesondere auch zur Überwachung von Fehleinstellungen von einzelnen Elementen der Antriebseinrichtung genutzt werden. Bei der Kalibrierung einer Antriebseinrichtung in einem Roboterarm kann auf diese Weise eine im Betrieb auftretende Dejustage der einzelnen Roboterglieder bzw. Robotergelenkte erkannt und korrigiert werden. Es kann so auf einfache Weise ein selbstüberwachendes System realisiert werden.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Darstellung eines Roboterarms zeigt,
- Figur 2: eine Abfolge von mehreren Posen eines vereinfacht skizzierten zweiachsigen Roboterarms zeigt und
- Figur 3: eine Abfolge von mehreren Posen eines vereinfacht skizzierten dreiachsigen Roboterarms zeigt.

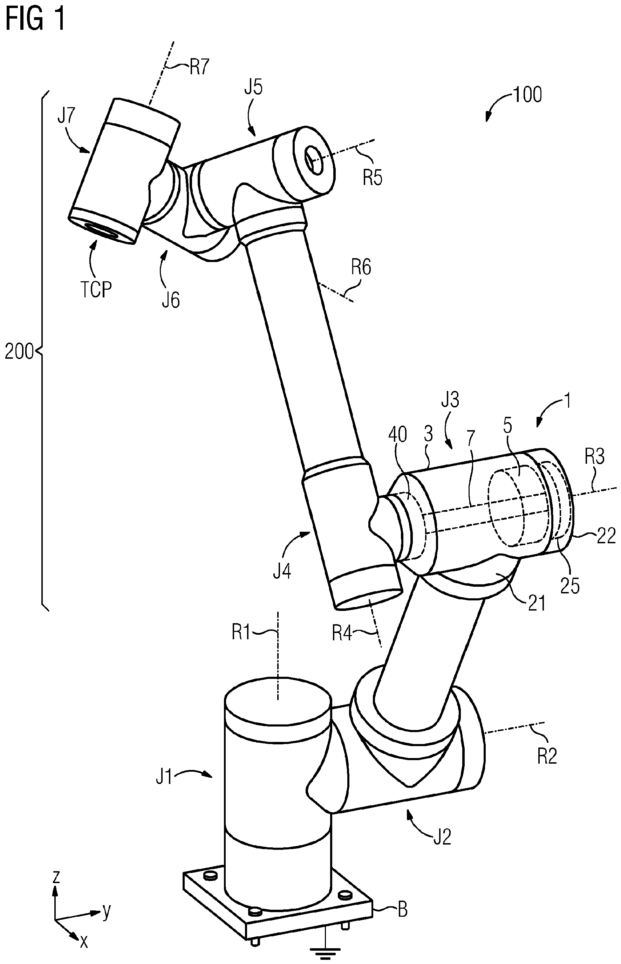

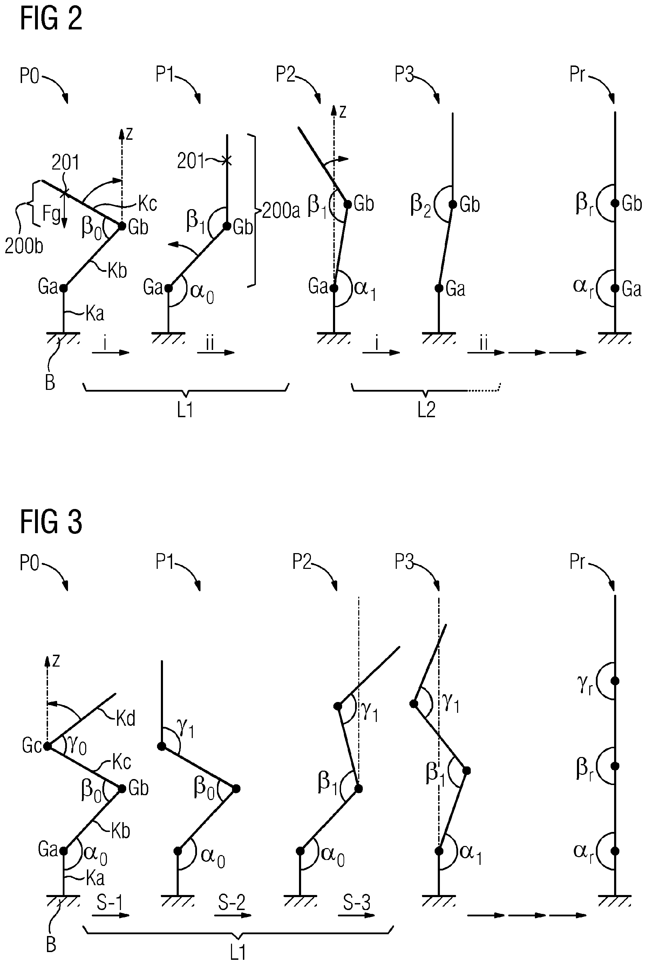

In den Figuren sind gleiche oder funktionsgleiche Elemente mit gleichen Bezugszeichen versehen. In Figur 1 ist eine schematische perspektivische Darstellung eines Roboterarms 100 gezeigt, welcher mit dem erfindungsgemäßen Verfahren ausgerichtet werden kann. Es handelt sich hier um einen Roboterarm mit sieben Robotikgelenken J1 bis J7, welche jeweils eine Drehung um eine zugehörige Rotationsachse R1 bis R7 ermöglichen. Es handelt sich also um einen Roboterarm mit sieben rotatorischen Freiheitsgraden. Das "innerste" Gelenk J1 ist mit einer Basis B verbunden, welche als übergeordnete mechanische Masse dient. Das "äußerste" Gelenk J7 kann an der Stelle TCP einen nicht näher dargestellten Endeffektor tragen. Innerhalb der einzelnen Gelenke J1 bis J7 ist jeweils eine Antriebseinrichtung angeordnet. Es handelt sich um Rotationsantriebe zur Drehung der einzelnen Gelenke, deren grundlegender Aufbau und deren mechanische Wirkungsweise aus dem Stand der Technik bekannt sind. Zwei oder mehr der gezeigten Rotationsgelenke können mit dem erfindungsgemäßen Verfahren ausgerichtet werden. Diese werden daher im Zusammenhang mit der Erfindung als "ausgewählte Gelenke" bezeichnet. Zumindest für diese ausgewählten Gelenke wird nach Durchlaufen des Verfahrens eine übergeordnete Referenzpose erreicht, wie im Zusammenhang mit den Figuren 2 und noch 3 noch deutlicher werden wird.

Die sogenannten ausgewählten Gelenke sind diejenigen, bezüglich derer mit anderen Teilelementen des Roboterarms ein exzentrisches Hebelelement gebildet wird, welches aufgrund der Schwerkraft ein winkelabhängiges Drehmoment ausbilden kann. Die ausgewählten Gelenke können daher mit dem erfindungsgemäßen Verfahren automatisiert in eine Umkehrlage bezüglich dieses Hebels gebracht werden. Hierzu sollten die zugehörigen Rotationsachsen zumindest mit einer horizontalen Richtungskomponente ausgerichtet werden können. Zumindest für die Gelenke J2, J3 und J5 sind hier beide Voraussetzungen erfüllt: Es wird jeweils durch die weiter außenliegenden Teile des Roboterarms ein exzentrischer Hebelarm gebildet, und die zugehörige Rotationsachse kann in einer vertikal (entlang der z-Achse) ausgestreckten Pose eine horizontale Richtung einnehmen. Eine übergeordnete Referenzpose Pr kann also so definiert werden, dass durch die Gelenke J2, J3 und J5 eine vertikale Streckung bewirkt wird. Die Winkelstellungen der übrigen Gelenke J1, J4, J6 und J7 können dabei entweder frei einstellbar bleiben oder auf andere Weise in eine Zielposition gebracht werden.

Figur 1 dient als Beispiel dafür, wie in einem Roboterarm 100 sowohl "ausgewählte Robotikgelenke", die mit dem Verfahren automatisch ausrichtbar sind, als auch andere Gelenken zusammentreffen können. Grundsätzlich können aber auch Roboterarme 100 realisiert werden, bei denen zumindest die Mehrzahl der Gelenke oder sogar alle Gelenke sogenannte ausgewählte Gelenke sind. So könnte auch das basisnahe Gelenk J1 grundsätzlich ein ausgewähltes Gelenk sein, beispielsweise wenn es durch Wandmontage oder ein L-förmiges Anschlussstück an der Basis in einer horizontalen Achslage liegen würde. Auch das äußerste Gelenk (hier J7) könnte ein ausgewähltes Gelenk sein, beispielsweise wenn am Tool Center Point (TCP) ein Werkzeug montiert wäre, welches ein exzentrisches Hebelelement ausbilden würde. Auch wäre es grundsätzlich möglich, dass alle dazwischenliegenden Gelenke ausgewählte Gelenke sind, beispielsweise wenn die Gelenkverbindungen (also die Koppeln) so geformt wären, dass für alle Gelenke J2 bis J6 eine horizontale Achslage innerhalb der xy-Ebene oder zumindest mit signifikanter Richtungskomponente in xy-Ebene eingenommen werden könnte. Für die illustrativen Beispiele zur Durchführung des Verfahrens in den Figuren 2 und 3 werden daher jeweils Roboterarme angenommen, in denen alle vorliegenden Gelenke als "ausgewählte Gelenke" realisiert sind.

Beispielhaft für eines der "ausgewählten Gelenke" ist in Figur 1 der innere Aufbau von Gelenk J3 etwas näher skizziert: Dieses Robotikgelenk J3 weist eine Antriebseinrichtung 1 auf, die eine Drehung um die Rotationsachse R3 ermöglicht. Die Antriebseinrichtung 1 umfasst in diesem Beispiel eine elektrische Antriebsmaschine 5, welche grundsätzlich sowohl im Motor-Modus als auch im Generator-Modus betrieben werden kann. Über eine Antriebswelle 7 ist der Rotor dieser Antriebsmaschine drehmomentübertragend mit einem Abtriebskörper 40 gekoppelt. Im Bereich zwischen Antriebsmaschine 5 und Abtriebskörper 40 kann auch optional ein hier nicht dargestelltes Getriebe vorgesehen sein, welches die Drehung übersetzt und die Kopplung indirekt vermittelt. Wesentlich ist nur, dass eine Drehung der Maschine 5 auf den Abtriebskörper 40 übertragen wird. Die vom Gelenk J3 aus gesehen weiter außenliegenden Elemente bilden zusammen ein exzentrisches Hebelelement 200 aus. Durch Drehung des Abtriebskörpers kann dieses Hebelelement 200 in eine obere Umkehrlage gebracht werden. Diese Lage kann insbesondere durch einen Nulldurchgang des Maschinenstroms erkannt und automatisch eingenommen werden. Hierzu ist z.B. im Bereich der Endkappe 22 des Gelenks eine Steuereinrichtung 25 angeordnet, die einen hier nicht näher gezeigten Stromsensor umfasst und neben der Funktionalität einer Steuereinrichtung auch die Funktionalität einer Auswerteeinrichtung abdeckt. So können mit dieser Steuereinrichtung 25 einzelne Winkelpositionen des Abtriebskörpers automatisiert angesteuert werden, und außerdem kann der Nulldurchlauf der Stromkurve (ggf. mit Mittelung der Werte für Hinrichtung und Rückrichtung) automatisiert bestimmt werden.

Figur 2 zeigt eine Abfolge von mehreren Posen P0 bis Pr eines vereinfacht skizzierten Roboterarms mit zwei Rotationsgelenken Ga und Gb. Bei beiden Gelenken soll es sich um ausgewählte Gelenke handeln, deren jeweilige Rotationsachse senkrecht zur vertikalen z-Richtung liegt. Das Gelenk Ga ist das basisnahe Gelenk und ist mit der Basis B durch eine Koppel Ka verbunden. Untereinander sind die beiden Gelenke durch eine Koppel Kb verbunden. Eine außenliegende Koppel Kc trägt einen hier nicht näher dargestellten Endeffektor. P0 ist die Ausgangspose, von der aus mit dem erfindungsgemäßen Verfahren die übergeordnete Referenzpose in mehreren iterativen Schritten erreicht wird. In der Referenzpose Pr sind alle Koppeln in z-Richtung vertikal ausgestreckt, und die Winkelstellungen α und β der beiden Gelenke liegen (definitionsgemäß) jeweils bei 180°.

Um diese Referenzpose Pr zu erreichen, werden ausgehend von der Ursprungspose P0 in einem iterativen Verfahren mehrere Winkeländerungen in den Einzelgelenken Ga und Gb vorgenommen. Im ersten Schleifendurchlauf L1 finden zwei Teilschritte i) und ii) statt. Dabei wird im ersten Teilschritt i) beispielsweise das außenliegende Gelenk Gb eingestellt. Die zugehörige Winkeländerung von β₀ zu β₁ wird automatisiert durchgeführt und zwar so, dass das zugehörige exzentrische Hebelelement 200b in eine obere Umkehrlage gebracht wird. Für das außenliegende Gelenk Gb wird das exzentrische Hebelelement 200b durch die außenliegende Koppel Kc gebildet. Im Massenschwerpunkt 201 dieses Hebelelements wirkt eine Gravitationskraft Fg, die das Hebelelement nach unten zieht und im Bereich des Gelenks Gb ein Drehmoment bewirkt. Im ersten Teilschritt wird dieses Hebelelement 200b nun automatisiert in die obere Umkehrlage gemäß Pose P1 gebracht, in der das Drehmoment des Hebels bei Null ist. Diese Umkehrlage kann insbesondere durch Bestimmung (und ggf. Mittelung) von Nulldurchläufen des Maschinenstroms in der zugehörigen Antriebsvorrichtung ermittelt werden. So wird der Roboterarm automatisiert in die Pose P1 gebracht, in der der Massenschwerpunkt 201 des Hebelelements 200b auf der z-Achse liegt.

Im zweiten Teilschritt ii) wird eine entsprechende Ausrichtung für das weiter innenliegende Gelenk Ga durchgeführt: Das zugehörige exzentrische Hebelelement 200a wird hier durch die beiden Koppeln Kb und Kc sowie das dazwischenliegende Gelenk Gb gebildet. Im Teilschritt ii) wird das innenliegende Gelenk Ga so bewegt, dass dieses ganze Hebelelement 200a mit seinem zugehörigen Massenschwerpunkt auf der z-Achse zu liegen kommt. Hierbei wird die Winkelposition im Gelenk Ga von α₀ zu α₁ verändert, und es wird die Pose P2 erreicht. Für das vorliegende Beispiel mit nur zwei ausgewählten Gelenken Ga und Gb ist damit der erste Schleifendurchlauf L1 des iterativen Verfahrens abgeschlossen. Für den zweiten Schleifendurchlauf L2 ist in Figur 2 nur noch der erste Teilschritt i) zur Pose P3 angedeutet: Auch hier wird ähnlich wie bei der allerersten Bewegung nur das Hebelelement 200b mit seinem Schwerpunkt auf die z-Achse gedreht. Wie durch die weiteren Pfeile angedeutet, schließt sich der entsprechende Teilschritt ii) für das innere Gelenk Gb an, und in mehreren weiteren iterativen Schleifendurchläufen werden diese Teilschritte abwechselnd so lange wiederholt, bis ein Abbruchkriterium für die verbleibenden Winkeländerungen erreicht wird. An diesem Punkt des Verfahrens ist die vollständig vertikal ausgestreckte Referenzpose Pr mit der vorgegebenen Genauigkeit erreicht.

In Figur 3 ist beispielhaft gezeigt, wie sich das beschriebene Verfahren auf eine höhere Anzahl von automatisch auszurichtenden Gelenken übertragen lässt. Gezeigt ist ein vereinfacht skizzierter Roboterarm mit drei ausgewählten Rotationsgelenken Ga, Gb und Gb, den entsprechenden Gelenkwinkeln α, β, γ und vier Koppeln Ka, Kb, Kc und Kd, welche die Gelenke untereinander bzw. mit der Basis B und dem Tool Center Point verbinden. Gezeigt ist wiederum ein erster Schleifendurchlauf L1, bei dem diese drei Gelenke in drei Teilschritten s-1), s-2) und s-3) nacheinander automatisiert ausgerichtet werden. Auch hier ist beispielhaft eine Abfolge vom äußersten Gelenk zum innersten Gelenk gezeigt, wobei dies nicht zwingend ist. In jedem Teilschritt s-i) wird der relevante exzentrische Hebelarm in die obere Umkehrlage gebracht. In jedem Schleifendurchlauf wird jedes der Gelenke einmal verstellt. Analog wie beim Beispiel der Figur 2 werden auch hier nach einer gewissen Anzahl von Schleifendurchläufen die Schwellwerte für die Winkeländerungen unterschritten, und die Referenzpose Pr ist mit der vorbestimmten Genauigkeit erreicht.

### Bezugszeichenliste

- 1: Antriebseinrichtung
- 3: Antriebsgehäuse
- 5: Antriebsmaschine
- 7: Antriebswelle
- 21: Sockel
- 22: Endkappe
- 25: Steuereinrichtung (inklusive Auswerteeinrichtung und Stromsensor)
- 40: Abtriebskörper (Abtriebswelle)
- 100: Roboterarm
- 200: exzentrisches Hebelelement
- 200a: exzentrisches Hebelelement für Gelenk Ga
- 200b: exzentrisches Hebelelement für Gelenk Gb
- 201: Massenschwerpunkt
- B: Basis des Roboterarms
- Fg: Gravitationskraft
- Ga: ausgewähltes Robotikgelenk
- Gb: ausgewähltes Robotikgelenk
- Gc: ausgewähltes Robotikgelenk
- α: Winkel beim ausgewählten Robotikgelenk Ga
- β: Winkel beim ausgewählten Robotikgelenk Gb
- γ: Winkle beim ausgewählten Robotikgelenk Gc
- i: erster Teilschritt
- ii: zweiter Teilschritt
- s-i: Schritt Nr. i
- J1: erstes Robotikgelenk mit Achse R1
- J2: zweites Robotikgelenk mit Achse R2
- J3: drittes Robotikgelenk mit Achse R3
- J4: viertes Robotikgelenk mit Achse R4
- J5: fünftes Robotikgelenk mit Achse R5
- J6: sechstes Robotikgelenk mit Achse R6
- J7: siebtes Robotikgelenk mit Achse R7
- Ka: Koppel
- Kb: Koppel
- Kc: Koppel
- Kd: Koppel
- L1: erster Schleifendurchlauf
- L2: zweiter Schleifendurchlauf
- Pi: Pose Nr. i
- Pr: Referenzpose (Ruhepose)
- TCP: Endeffektor (Tool Center Point)
- x,y,z: kartesische Raumrichtungen

## Patentansprüche

1. Verfahren zur Ausrichtung eines Roboterarms (100) in einer übergeordneten Referenzpose (Pr),
- wobei der Roboterarm (100) eine Mehrzahl von Robotikgelenken (J1 bis J7) aufweist, welche jeweils eine Antriebseinrichtung (1) umfassen, die eine Drehung um eine zugehörige Rotationsachse (A1 bis A7) ermöglicht,
- wobei für zumindest zwei ausgewählte Robotikgelenke (J2,J3,J5,Ga,Gb,Gc) durch ein oder mehrere andere Teilelemente des Roboterarms (100) ein zugehöriges exzentrisches Hebelelement (200) gebildet ist,
- wobei das Verfahren die folgenden Teilschritte umfasst:
i) automatisiertes Ausrichten der Antriebseinrichtung (1) eines ersten ausgewählten Robotikgelenks (Gb) in einer ersten Zielposition (θ_{b1}) bei welcher sich das zugehörige erste exzentrische Hebelelement (200b) in einer Umkehrlage befindet,
ii) automatisiertes Ausrichten der Antriebseinrichtung (1) eines zweiten ausgewählten Robotikgelenks (Ga) in einer zweiten Zielposition (θₐ₂), bei welcher sich das zugehörige zweite exzentrische Hebelelement (200a) in einer Umkehrlage befindet,
wobei die Teilschritte i) und ii) in einer iterativen Schleife so lange nacheinander wiederholt werden, bis die in jedem Teilschritt bewirkte Winkeländerung einen vorgegebenen Grenzwert unterschreitet.

2. Verfahren nach Anspruch 1, bei welchem die Antriebseinrichtungen (1) der wenigstens zwei ausgewählten Robotikgelenke jeweils
- eine elektrische Antriebsmaschine (5) umfassen,
- einen Abtriebskörper (40) umfassen, welcher mittels der Antriebsmaschine (5) bezüglich der zugehörigen Rotationsachse (R3) drehbar ist und
- einen Stromsensor (25) zur Messung eines innerhalb der elektrischen Antriebsmaschine (5) fließenden Betriebsstroms umfassen, und wobei für jede dieser Antriebseinrichtungen (1) das automatisierte Ausrichten in der Zielposition durch die folgenden Teilschritte bewirkt wird:
a) aufeinanderfolgendes Ansteuern einer Mehrzahl von vorgegebenen Winkelpositionen des Abtriebskörpers (40),
b) Messung eines zugehörigen Stromwerts für jede vorgegebene Winkelposition mittels des Stromsensors (25),
c) Ermittlung einer Zielposition aus den so ermittelten Wertepaaren, derart dass der zugehörige Stromwert der Zielposition einem Nulldurchgang möglichst nahekommt.

3. Verfahren nach Anspruch 2, bei welchem Schritt a) die folgenden Teilschritte aufweist:
a1) aufeinanderfolgendes Ansteuern einer ersten Abfolge von vorgegebenen Winkelpositionen, derart dass dabei der Abtriebskörper kontinuierlich mit einer festen ersten Drehrichtung gedreht wird,
a2) aufeinanderfolgendes Ansteuern einer zweiten Abfolge von vorgegebenen Winkelpositionen, derart dass dabei der Abtriebskörper kontinuierlich mit einer entgegengesetzten zweiten Drehrichtung gedreht wird,
und wobei in Schritt c) aus den ermittelten Wertepaaren der ersten Abfolge ein erster Referenzwinkel bestimmt wird und aus den ermittelten Wertepaaren der zweiten Abfolge ein zweiter Referenzwinkel bestimmt wird, und aus einer Mittelung von erstem und zweitem Referenzwinkel eine übergeordnete Zielposition bestimmt wird.

4. Verfahren nach einem der Ansprüche 1 bis 3, bei welchem die Gesamtzahl der Robotikgelenke (J1 bis J7) zwischen 3 und 7 liegt.

5. Verfahren nach einem der Ansprüche 1 bis 4, bei welchem für eine Anzahl n von drei oder mehr ausgewählten Robotikgelenken (Ga,Gb,Gc) durch ein oder mehrere andere Teilelemente des Roboterarms ein zugehöriges exzentrisches Hebelelement (200,200a,200b) gebildet ist,
- wobei das Verfahren eine iterativen Schleife umfasst, bei der in jedem Durchlauf der Schleife für alle n ausgewählten Robotikgelenke nacheinander der folgende Teilschritt durchgeführt wird:
s-i) automatisiertes Ausrichten der Antriebseinrichtung (1) des jeweiligen ausgewählten Robotikgelenks (Ga,Gb,Gc) in einer zugehörigen Zielposition, bei welcher sich das zugehörige exzentrische Hebelelement (200, 200a, 200b) in einer Umkehrlage befindet
- wobei diese Schleife so oft durchlaufen wird, bis die in jedem Teilschritt bewirkte Winkeländerung einen vorgegebenen Grenzwert unterschreitet.

6. Verfahren nach einem der vorhergehenden Ansprüche, bei der in jedem Durchlauf der iterativen Schleife die Reihenfolge, in der die einzelnen ausgewählten Robotikgelenke (Ga,Gb,Gc) ausgerichtet werden, kontinuierlich von außen nach innen verläuft.

7. Verfahren nach einem der Ansprüche 1 bis 5, bei welchem in jedem Durchlauf der iterativen Schleife die Reihenfolge, in der die einzelnen ausgewählten Robotikgelenke (Ga,Gb,Gc) ausgerichtet werden, kontinuierlich von innen nach außen verläuft.

8. Verfahren nach einem der vorhergehenden Ansprüche, bei welchem entweder alle vorhandenen Robotikgelenke oder alle mit Ausnahme des innersten (J1) und/oder äußersten (J7) Robotikgelenks ausgewählte Robotikgelenke (Ga,Gb,Gc) sind, welche innerhalb der iterativen Schleife automatisch ausgerichtet werden.

9. Verfahren nach einem der vorhergehenden Ansprüche, bei welchem die ausgewählten Robotikgelenke (Ga,Gb,Gc) jeweils als Teil der Antriebsvorrichtung (1) einen Drehgeber zur Bestimmung einer Winkellage des Abtriebskörpers (40) aufweisen.

10. Verfahren nach Anspruch 9, bei welchem die einzelnen Drehgeber mit der aus der übergeordneten Referenzpose (Pr) des Roboterarms abgeleiteten lokalen Referenz-Winkelposition (αᵣ,βᵣ,γᵣ) kalibriert werden.

11. Verfahren nach einem der vorhergehenden Ansprüche, bei welchem die ausgewählten Robotikgelenke (Ga,Gb,Gc) jeweils als Teil der Antriebsvorrichtung (1) eine Drehmoment-Messvorrichtung zur Messung eines innerhalb der Antriebsvorrichtung wirkenden Drehmoments aufweisen.

12. Verfahren nach Anspruch 11, bei welchem die einzelnen Drehmoment-Messvorrichtungen durch Messung des Drehmoments in der übergeordneten Referenzpose (Pr) des Roboterarms kalibriert werden.

13. Verfahren nach einem der vorhergehenden Ansprüche, bei welchem nach Erreichen der übergeordneten Referenzpose (Pr) ein ausgewähltes Robotikgelenk in eine Winkelposition bewegt wird, bei welcher das zugehörige exzentrische Hebelelement ein maximales Drehmoment bewirkt.

14. Verfahren nach einem der vorhergehenden Ansprüche, bei welchem die gesamte Ausrichtung des Roboterarms (100) in der übergeordneten Referenzpose (Pr) in Intervallen mehrfach wiederholt wird.

15. Verfahren nach Anspruch 14, bei welchem die wiederholte Ausrichtung des Roboterarms (100) in der übergeordneten Referenzpose (Pr) zur Überwachung von Fehleinstellungen von einzelnen Elementen des Roboterarms genutzt wird.
